# EUROPÄISCHE PATENTSCHRIFT

(11) **EP 1 194 783 B1**
(45) Veröffentlichungstag und Bekanntmachung des Hinweises auf die Patenterteilung: **12.12.2007**
(21) Anmeldenummer: 00943958.9
(22) Anmeldetag: 01.07.2000
(51) Int. Cl.: G01P 13/04, F16H 59/44, F16H 59/60, F16H 59/46, B60W 10/00

(54) **VERFAHREN ZUR ERKENNUNG DES FAHRZUSTANDS BEIM ANROLLEN EINES KRAFTFAHRZEUGS**
METHOD OF DETECTING THE RUNNING STATE OF A VEHICLE DURING STARTING
PROCEDE DE RECONNAISSANCE DE L'ÉTAT DE ROULAGE D'UN VÉHICULE LORS DU DEMARRAGE& x9;

(30) Priorität: 09.07.1999 DE 19932052
(43) Veröffentlichungstag der Anmeldung: 10.04.2002
(73) Patentinhaber: ZF Friedrichshafen AG, 88038 Friedrichshafen (DE)
(72) Erfinder: HABECK, Dirk, D-88085 Langenargen (DE)
(86) Internationale Anmeldenummer: PCT/EP2000/006148
(87) Internationale Veröffentlichungsnummer: WO 2001/004639

(56) Entgegenhaltungen:
- DE-A- 4 229 024
- DE-A- 4 328 893
- DE-A- 19 733 465
- US-A- 5 788 040

## Beschreibung

Die Erfindung betrifft ein Verfahren zur Erkennung des Fahrzustandes bei einem Anrollen eines Kraftfahrzeuges mit einer Standabkoppelung, wobei eine Drehrichtung einer Abtriebswelle eines automatischen Getriebes erkannt wird, nach der im Oberbegriff des Patentanspruches 1 näher definierten Art sowie eine Vorrichtung zur Durchführung des Verfahrens.

Aus der Praxis sind Kraftfahrzeuge mit einem Automatgetriebe oder einem automatisierten Handschaltgetriebe bekannt, bei denen eine auch als Stand-By-Control (SBC) bezeichnete Standabkoppelung des Antriebsstranges, welche bei oder nahe einem Stillstand des Fahrzeuges aktiviert ist, vorgesehen ist. Eine solche Standabkoppelung des Antriebsstranges bewirkt, daß bei Fahrzeugstillstand eine Kriechneigung des Fahrzeuges bei eingelegtem Gang, welche ohne Betätigung der Bremse aufgrund des Kraftschlusses bei herkömmlichen Automatgetrieben auftritt, gemindert wird. Eine Minimierung der Kriechneigung wird zunehmend im Hinblick auf eine Verringerung des Kraftstoffverbrauches und der auftretenden Abgasemissionen gewünscht.

Wenn während der Standabkoppelung ein Anfahrwunsch seitens des Fahrers registriert wird, z. B. durch Lösen der Bremse, wird die Standabkoppelung beendet, und eine zuschaltende Kupplung wird je nach eingelegter Fahrposition für Vorwärtsfahrt oder Rückwärtsfahrt in Abhängigkeit eines berechneten Synchronpunktes mit Druck beaufschlagt.

Als problematisch erweist sich dabei die Erfassung der Drehrichtung der Abtriebswelle des Getriebes. Zur Erfassung der Abtriebsdrehzahl werden in Getrieben häufig Induktivsensoren verwendet, welche jedoch im Bereich niedriger Umdrehungszahlen ungenau sind und erst ab höheren Umdrehungszahlen, als sie beim Anrollen eines Fahrzeuges vorliegen, aktiv werden. Zur Erzielung einer größeren Genauigkeit werden in der Praxis Hall-Sensoren eingesetzt. Bei beiden Arten von Sensoren ist es jedoch nicht möglich, mit einem einzigen Sensor die Drehrichtung der Abtriebswelle zu erkennen, da die Zahnflanken eines Geberrades üblicherweise aus Kostengründen symmetrisch ausgebildet sind und somit das gleiche Spannungssignal unabhängig von der Drehrichtung erzeugen. Bei der Auswertung dieses Spannungssignales, aus dem die Abtriebsdrehzahl ermittelt wird, läßt sich die Drehrichtung der Abtriebswelle somit nicht ermitteln.

In der US 5,788,040 A ist ein Verfahren bekanntgeworden, bei dem die Drehrichtung einer Getriebewelle aus mit einem Drehzahlsensor gemessenen Drehzahlen der Getriebewelle analytisch ermittelt wird. Hierzu wird nach dem Einlegen einer Fahrposition aus den gemessenen Drehzahlen über einen Differenzquotient eine aktuelle Beschleunigung der Getriebewelle berechnet und mit einem zuvor gleichsam berechneten Beschleunigungswert der Getriebewelle verglichen. Ist die Differenz beider Beschleunigungswerte größer als Null, so wird die Drehrichtung der Getriebewelle als positiv gesetzt. Analog dazu wird die Drehrichtung der Getriebewelle als negativ gesetzt, wenn die Differenz beider Beschleunigungswerte kleiner als Null ist. Problematisch bei diesem Verfahren kann die Zeitdauer sein, die für eine hinreichend genaue Auswertung der Drehzahlmeßwerte erforderlich ist. Insbesondere bei einem Anrollen des Fahrzeuges aus einer aktiven Standabkopplungsfunktion heraus erwartet der Fahrer unmittelbaren Kraftschluß des Fahrzeuges. Zudem ist durch das Verfahren der US 5,788,040 A keine feinere Betrachtung der Fahrzustände beim Anrollen des Fahrzeuges möglich, beispielsweise ein Anrollen am Berg oder am Hang.

Zur Erfassung der Anrollrichtung des Fahrzeuges bietet es sich an, einen zweiten Sensor vorzusehen oder das Geberrad mit unsymmetrischen Zahnflanken auszubilden, was jedoch beides zu erheblich höheren Kosten führt.

Da ein Fahrzeug insbesondere bei starken Hanglagen gelegentlich entgegen der gewünschten Fahrtrichtung und eingelegten Fahrposition für Vorwärtsfahrt D oder Rückwärtsfahrt R nach Beenden der Standabkoppelung anrollen kann, was jedoch mangels Erfassung der Drehrichtung der Abtriebswelle von einer elektronischen Getriebesteuerung nicht erkannt wird, erfolgt die Ansteuerung der zuschaltenden Kupplung durch die elektronische Getriebesteuerung in solchen Situationen entsprechend der eingelegten Fahrposition und nicht in Abhängigkeit des tatsächlichen Fahrzustandes, also insbesondere nicht in Abhängigkeit der tatsächlichen Relativdrehzahl der zuschaltenden Kupplung.

Die Synchronpunktberechnung und die Ansteuerung der zuschaltenden Kupplung, welche üblicherweise bis zu dem Synchronpunkt entlang einer Komfortrampe und danach bis zu einem Drucksprung auf Hauptdruckniveau mit einer steileren Druckrampe hydraulisch angesteuert wird, wird folglich nicht mehr korrekt durchgeführt, wenn das Fahrzeug entgegen der gewünschten Fahrtrichtung anrollt.

Wenn beispielsweise das Fahrzeug aufgrund einer sehr steilen Hanglage trotz gewünschter Vorwärtsfahrt bergauf rückrollt, wird der Synchronpunkt, der mathematisch aus dem Produkt aus Antriebsdrehzahl und Übersetzung ermittelt wird, als für die tatsächlichen Verhältnisse zu früh erkannt. Die Drehrichtungsumkehr nach vorne wird daher mit einem für Fahrzeuginsassen deutlich spürbaren Ruck durchgeführt.

Neben derartigen Komforteinbußen hat eine falsche Synchronpunktberechnung aufgrund einer nicht gewollten Anrollrichtung auch Dauerhaltbarkeitsprobleme für die zuschaltende Kupplung zur Folge, da als mechanischer Getriebeschutz häufig eine elektronische Vorgabe eines reduzierten maximalen Motormomentes vorgesehen ist. Ein derartiger Motoreingriff wird in der Regel am Synchronpunkt aufgehoben, um die Spontanität des Fahrzeuges nicht unnötig lange zu beeinträchtigen. Bei einem zu früh berechneten Synchronpunkt wird somit auch ein als Getriebeschutz vorgesehener Motoreingriff zu früh abgebrochen, wodurch eine erhebliche thermische Belastung bei hohen Lastanforderungen des Motors auftreten kann.

Es ist Aufgabe der vorliegenden Erfindung, ein Verfahren zur Erkennung der Drehrichtung einer Abtriebswelle eines automatisierten Getriebes bei einem Anrollen eines Kraftfahrzeuges nach Beendigung einer Standabkoppelung zu schaffen, welche mit minimalem Bauaufwand durchführbar ist und eine korrekte Ansteuerung einer zuschaltenden Kupplung ermöglicht. Des weiteren ist es Aufgabe der vorliegenden Erfindung, eine Vorrichtung zur Durchführung eines derartigen Verfahrens zu schaffen.

Erfindungsgemäß wird diese Aufgabe mit einem Verfahren nach dem Patentanspruch 1 sowie mit einer Vorrichtung nach dem Patentanspruch 14 gelöst.

Das erfindungsgemäße Verfahren nutzt in vorteilhafter Weise die Erkenntnis, dass der qualitative und quantitative Verlauf eines vorhandenen Drehzahlsignals, welches auf herkömmliche Weise mit einem symmetrische Flanken aufweisenden Geberrad und einem herkömmlichen kostengünstigen Sensor permanent erfaßt wird, je nach Drehrichtung der Abtriebswelle und damit der Anrollrichtung des Fahrzeuges abweicht. Bei einem Anrollen des Fahrzeuges entgegen der gewünschten Fahrtrichtung unterscheiden sich die qualitativen Drehzahlverläufe zwischen dem gewünschten Fahrzustand und dem tatsächlichen Fahrzustand sogar stark voneinander.

Die Erfindung nutzt diese Erkenntnis in der Weise, dass ein zeitabhängiges Verhalten eines ermittelten Parameters, vorzugsweise der Getriebeabtriebsdrehzahl, mit zugehörigen, für einen Fahrzustand in Vorwärtsfahrt oder Rückwärtsfahrt charakteristischen Parametersätzen verglichen wird. Wenn aufgrund des qualitativen und quantitativen Verlaufs des verglichenen Parameters ein bestimmter Fahrzustand erkannt wird, wird die Synchronpunktberechnung in Abhängigkeit dieses erkannten Fahrzustandes durchgeführt.

Mit dem erfindungsgemäßen Verfahren erfolgt somit die Erkennung der Drehrichtung der Abtriebswelle unabhängig von der Signalgenerierung des Geberrades, welches bei dem erfindungsgemäßen Verfahrens kostengünstig mit symmetrisch ausgeprägten Zahnflanken ausgebildet sein kann. Da die Drehrichtungserkennung für Anfahrvorgänge in Vorwärtsfahrt oder Rückwärtsfahrt bei Automatgetrieben oder bei automatisierten Handschaltgetrieben erfindungsgemäß lediglich über eine Softwarelogik unter Beachtung von gewissen Randbedingungen realisierbar ist, kann der Aufwand an Sensorik minimal gehalten werden, so daß lediglich ein herkömmlicher Drehzahlsensor zur Erfassung der Drehzahl erforderlich ist.

Mit der Erkennung der Drehrichtung der Abtriebswelle und damit der Anrollrichtung des Fahrzeuges kann die Synchronpunktberechnung der zuschaltenden Kupplung vorteilhafterweise entsprechend dem tatsächlichen Fahrzustand durchgeführt werden. Das heißt, daß bei angewählter Vorwärtsfahrtrichtung aber tatsächlichem Rückwärtsrollen des Fahrzeuges an einem Hang der Synchronpunkt unter Berücksichtigung des Rückwärtsrollen berechnet wird, so daß die Druckansteuerung der zuschaltenden Kupplung mit größtmöglichem Komfort und Kupplungsschutz zeitlich und qualitativ korrekt durchgeführt werden kann. Dies bezieht sich auch auf eine gegebenenfalls von einer digitalen Motorelektronik vorgegebene Momentenreduzierung des maximal zulässigen Motormomentes, welche mit dem erfindungsgemäßen Verfahren am tatsächlichen Synchronpunkt aufgehoben wird. Eine Kupplungsüberlastung bei einem eventuell zu früh beendeten Motoreingriff wird somit verhindert.

Weitere Vorteile und Weiterbildungen der Erfindung ergeben sich aus den abhängigen Ansprüchen und aus den nachfolgend anhand der Zeichnung prinzipmäßig beschriebenen Ausführungsbeispielen.
Es zeigt:
- Fig. 1: ein Flußdiagramm eines Verfahrens zur Erkennung der Drehrichtung einer Abtriebswelle eines Automatgetriebes bei einem Anrollen eines Kraftfahrzeuges mit Standabkoppelung;
- Fig. 2: eine schematisierte Darstellung zeitabhäniger Verläufe einer Abtriebsdrehzahl n_AB für unterschiedliche Fahrzustände;
- Fig. 3: eine schematische Darstellung eines zeitabhängigen Verlaufs einer Drehrichtungserkennung bei verschiedenen Fahrzuständen und
- Fig. 4: eine schematische Darstellung des Verlaufs der Bestimmung der Drehrichtung der Abtriebswelle mit einer Lastanforderung vor Erkennen einer Abtriebsdrehzahl.

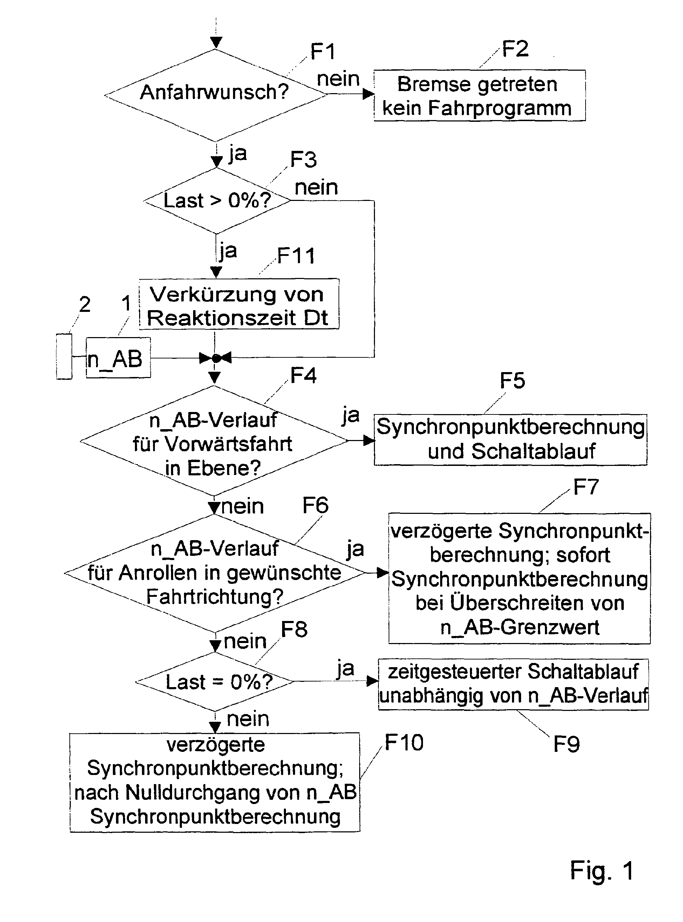

Bezug nehmend auf Fig. 1 ist stark schematisiert ein Ablaufdiagramm zur Erkennung der Drehrichtung einer Abtriebswelle eines Automatgetriebes beim Anrollen nach Aufheben einer Standabkoppelung des Antriebsstranges dargestellt.

Zur Durchführung des Verfahrens ist in einer nicht näher dargestellten elektronischen Getriebesteuerung, welche Signale über einen CAN-(Controller Area Network)-Datenbus mit Rechnereinheiten weiterer Aggregate austauscht, ein Programmodul vorgesehen, welches Eingangssignale von einem in Fig. 1 nur symbolisch angedeuteten Drehzahlsensor 1 erhält, welcher wiederum ein ebenfalls nur schematisch angedeutetes Geberrad 2 mit symmetrischen Zahnflanken abgreift.

Wie in Fig. 1 ersichtlich, wird zunächst in einer Funktion F1 geprüft, ob ein Anfahrwunschsignal vorliegt, das im vorliegenden Ausführungsbeispiel erkannt wird, wenn ein Bremsdruck p_b kleiner als ein vorgegebener Grenzwert ist. In hiervon abweichenden Ausführungen kann als Anfahrwunschsignal auch die Deaktivierung eines Bremssignales, das beispielsweise als Steuerbit einer elektronischen Bremsensteuerung auf dem Datenbus abrufbar ist, oder die Deaktivierung eines Bremslichtschalters oder das Überschreiten eines Grenzwertes der Abtriebsdrehzahl n_AB vorgesehen sein.

Falls kein Anfahrwunschsignal vorliegt, wird als Betriebszustand in einer Funktion F2 davon ausgegangen, daß die Bremse getreten ist und keine Fahrposition für Vorwärtsfahrt D oder Rückwärtsfahrt R eingelegt ist.

Falls ein Anfahrwunschsignal erkannt wird, wird in einer nachfolgenden Funktion F3 geprüft, ob eine Lastanforderung durch Betätigung des Fahrpedales vorliegt, bevor eine Abtriebsdrehzahl n_AB größer Null erkannt wird. Falls keine Lastanforderung vorliegt, wird nach Erkennen einer ermittelten Abtriebsdrehzahl n_AB deren Verlauf mit in der elektronischen Getriebesteuerung abgelegten Drehzahlverläufen für verschiedene Fahrzustände verglichen, wobei zunächst in einer Funktion F4 geprüft wird, ob der tatsächlich vorliegende Drehzahlverlauf mit Kenngrößen bzw. Kennlinien übereinstimmt, welche für ein Anrollen in der Ebene in Vorwärtsfahrt charakteristisch sind. Falls dies der Fall ist, wird eine entsprechende Synchronpunktberechnung sowie ein zugehöriger Schaltablauf in einer Funktion F5 durchgeführt.

Falls der Drehzahlverlauf nicht mit dem für den Fahrzustand "Anrollen in Vorwärtsfahrt in der Ebene" übereinstimmt, wird im dargestellten Ablaufdiagramm in einer weiteren Funktion F6 geprüft, ob ein Anrollen des Fahrzeuges in die gewünschte Fahrtrichtung vorliegt. Dies wird über den Abtriebsdrehzahlverlauf festgestellt, wobei die Synchronpunktberechnung verzögert wird, bis der Fahrzustand eindeutig feststeht.

Wenn das Fahrzeug in die gewünschte Fahrtrichtung rollt, wird bei Überschreiten eines vorgegebenen Grenzwertes der Abtriebsdrehzahl n_AB in einer Funktion F7 die Synchronpunktberechnung sofort gestartet.

Wenn sich als Fahrzustand ergibt, daß das Fahrzeug nicht in die gewünschte Fahrtrichtung anrollt, wird in einer weiteren Funktion F8 geprüft, ob eine Lastanforderung mittels einer Fahrpedalbetätigung vorliegt. Falls keine Lastanforderung vorliegt, wird eine Funktion F9 gestartet, welche einen zeitgesteuerten Schaltablauf unabhängig vom Drehzahlverlauf und einen zeitgesteuerten Motoreingriff vorgibt.

Hingegen wird bei einem Anrollen des Fahrzeuges entgegen der gewünschten Fahrtrichtung und gleichzeitiger Lastanforderung eine verzögerte Synchronpunktberechnung nach einem Nulldurchgang der Abtriebsdrehzahl n AB bzw. einer Drehrichtungsumkehr vorgenommen und der Schaltablauf für die tatsächlich vorliegende Fahrtrichtung in einer Funktion F10 ausgegeben.

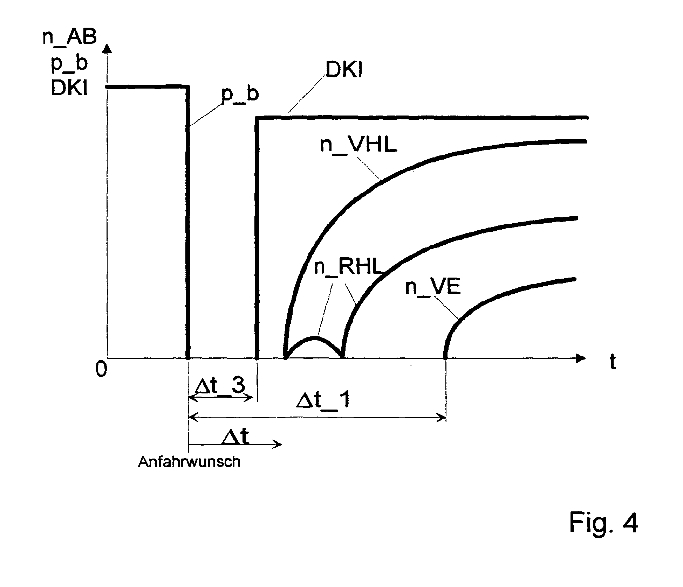

Wenn bereits eine Lastanforderung vor Erkennen einer Abtriebsdrehzahl n_AB größer Null in der Funktion F3 festgestellt wird, wird dies in einer der Funktion 4 zur Abfrage des Vorliegens des Fahrzustandes "Vorwärtsfahrt in der Ebene" vorgeschalteten Funktion F11 über eine bezüglich Fig. 4 näher beschriebene Verkürzung einer Reaktionszeit Δt berücksichtigt.

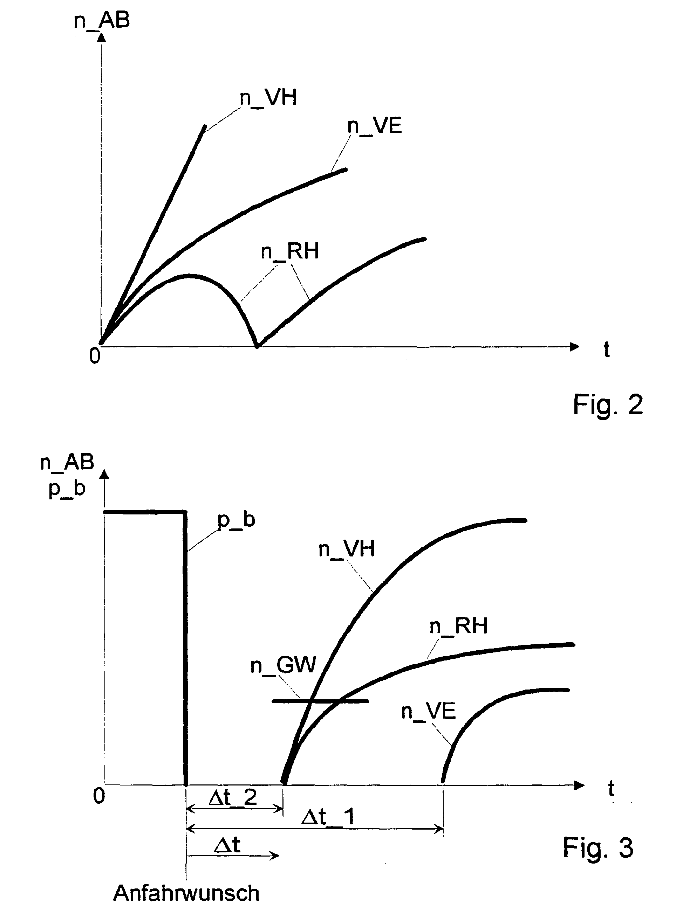

Fig. 2 zeigt prinzipmäßig charakteristische Drehzahlverläufe für den Fahrzustand "Vorwärtsfahrt in der Ebene", welcher mittels einer Kennlinie n_VE wiedergegeben ist, den Fahrzustand "Vorwärtsfahrt am Hang bergab", bei dem die Abtriebsdrehzahl n_AB gemäß einer Kennlinie n_VH verläuft, und den Fahrzustand "Vorwärtsfahrt am Hang steil bergauf mit Rückrollen" gemäß einer Kennlinie n_RH. Die gezeigten Drehzahlverläufe n_VE, n_VH und n_RH stellen jeweils Fahrzustände ohne Last dar.

Wie dem Diagramm in Fig. 2 zu entnehmen ist, weisen die Abtriebsdrehzahlen in den unterschiedlichen Fahrzuständen stark voneinander abweichende Gradienten auf, wobei der größte Gradient im Fahrzustand "Vorwärtsfahrt am Hang bergab" gegeben ist. Besonders charakteristisch ist der Drehzahlverlauf n_RH bei einem Anfahren an einem steilen Hang bergauf mit anfänglichem Rückrollen, da die Abtriebswelle bei aktivierter Standabkoppelung zunächst mit wachsender Geschwindigkeit entgegen der gewünschten Richtung dreht, wobei die zuschaltende Kupplung immer stärker eingreift und die Abtriebswelle bis zum Stillstand abbremst und anschließend mit gewünschter Drehrichtung antreibt.

Neben den gezeigten Fahrzuständen sind selbstverständlich weitere Kennlinien für die Fahrzustände "Vorwärtsfahrt bergauf", "Vorwärtsfahrt bergauf", "Rückwärtsfahrt in der Ebene", "Rückwärtsfahrt bergab", "Rückwärtsfahrt bergauf" und "Rückwärtsfahrt steil bergauf mit Rückrollen" jeweils ohne Lastanforderung und mit Lastanforderungen in Abhängigkeit der Fahrpedalstellung bzw. eines Drosselklappenwinkels DKI abgelegt.

In dem hier beschriebenen Ausführungsbeispiel stellt die Getriebeabtriebsdrehzahl n_AB die ermittelte Größe dar, welche mit abgelegten Kennlinien verglichen wird. Hiervon abweichend können selbstverständlich auch andere ermittelte Parameter, welche der Getriebeabtriebsdrehzahl n_AB äquivalent sind, wie z. B. der Drosselklappenwinkel DKI oder der Bremsdruck p_b zur Unterscheidung zwischen den Fahrzuständen herangezogen werden.

Neben dem Gradienten des Abtriebsdrehzahlverlaufes ist ein wichtiges Kriterium zur Unterscheidung zwischen Anrollen des Fahrzeugs in der Ebene oder am Hang vorwärts oder rückwärts die Reaktionszeit Δt, welche von dem Anfahrwunschsignal bis zu einem Erkennen einer Abtriebsdrehzahl n_AB größer Null verstrichen ist. Die Reaktionszeit Δt ist fahrzeugabhängig und entsprechend motorspezifischer Kennwerte, einer Fahrzeugmasse, einer Achsübersetzung und einem Wandler bzw. Anfahrelement abgelegt.

Aufgrund der Reaktionszeit Δt zwischen dem Anfahrwunschsignal, welches vorliegend durch einen sprungartigen Abfall des Bremsdruckes p_b beim Lösen der Bremse ausgegeben wird, und der Art des Anstieges der Abtriebsdrehzahl n_AB läßt sich eindeutig erkennen, wann ein Anrollen am Hang oder in der Ebene erfolgt.

Wie Fig. 3 zeigt, wird von dem Zeitpunkt des Abfallens des Bremsdruckes p_b an die Zeitspanne bzw. Reaktionszeit Δt gemessen, welche bis zu einem Anrollen des Fahrzeuges vergeht. Dabei sind wiederum für unterschiedliche Fahrzustände bestimmte Reaktionszeiten wie die dargestellten Δt_1, Δt_2 charakteristisch. Die längste in der Fig. 3 gezeigte Reaktionszeit Δt_1 entspricht der Zeitspanne zwischen Anfahrwunschsignal und einem Anrollen im Fahrzustand "Vorwärtsfahrt in der Ebene ohne Last", während bei der kürzeren Zeitspanne Δt_2 ein Anrollen am Hang erkannt wird.

Da allein aufgrund der bis zum Anrollen vergangenen Reaktionszeit Δt_2 noch nicht erkennbar ist, in welche Richtung das Fahrzeug am Hang rollt, wird zur Unterscheidung der Drehrichtung der Abtriebswelle der quantitative Verlauf der permanent ermittelten Drehzahl n_AB bis zu einer vorgegebenen Drehzahlgrenze n_GW mit in der elektronischen Getriebesteuerung abgelegten Drehzahlverläufen verglichen. Von diesen Drehzahlverläufen zeigt die Fig. 3 beispielhalber die Kennlinie n_VH für den Fahrzustand "Vorwärtsfahrt am Hang bergab", bei dem die Abtriebsdrehzahl n_AB je nach Hanglage sehr schnell ohne Last über den applizierbaren Grenzwert n_GW ansteigt, und die Kennlinie n_RH für den Fahrzustand "Vorwärtsfahrt am Hang mit Rückrollen" wiedergegeben, wobei sich der Drehzahlgradient hier wie bezüglich Fig. 2 beschrieben bei einem Rollen entgegen der gewünschten Fahrtrichtung an einem sehr steilen Hang und ohne anschließende Gaspedalbetätigung aufgrund der Leerlaufregelung des Motors zunehmend abflacht.

Bei Erkennen des Anrollens des Fahrzeuges am Hang wird die Synchronpunktberechnung verzögert erst dann gestartet, wenn die Drehrichtung der Abtriebswelle erkannt ist.

Der Grenzwert n_GW, bis zu dem der Drehzahlvergleich vorgenommen wird, ist applizierbar und wird so gewählt, daß eine zuverlässige Unterscheidung zwischen Vorwärtsrollen oder Rückwärtsrollen am Hang möglich ist.

Die in Fig. 3 dargestellten Kennlinien geben jeweils einen Fahrzustand ohne Lastanforderungen, d. h. Gaspedalbetätigung durch den Fahrer, wieder. Bei Fahrzuständen ohne Lastanforderung kann die Steigung am Hang in Abhängigkeit von dem Fahrzeug appliziert werden, d. h. über die Abtriebsdrehzahl n_AB kann die Steigung am Hang erkannt werden. Bei entsprechender Softwareverknüpfung kann damit in vorteilhafter Weise ein Neigungssensor unterstützt oder sogar eingespart werden.

In Fig. 4 ist die Situation gezeigt, daß nach dem Lösen der Bremse und dem einhergehenden Abfallen des Bremsdruckes p_b und vor Erkennen einer Abtriebsdrehzahl n_AB größer Null eine Last angefordert wird. Bei Erkennen einer Lastanforderung, welche mit dem Drosselklappenwinkel DKI wiedergegeben ist, und einer Reaktionszeit Δt, welche kürzer als die vordefinierte Reaktionszeit Δt_2 für einen Fahrzustand bei Anfahren in Hanglage oder die Reaktionszeit Δt_1 für ein Anrollen in der Ebene ist, wird eine errechnete Reaktionszeit Δt bis zum Erkennen einer Abtriebsdrehzahl n_AB in Abhängigkeit einer zwischen dem Anfahrwunschsignal und der Lastanforderungen verstrichenen Zeit Δt_3 und der Fahrpedalstellung bzw. dem Drosselklappenwinkel DKI verkürzt. Dadurch wird der erwartete zeitabhängige Anstieg der Abtriebsdrehzahl n_AB dahingehend korrigiert, daß die Reaktionszeit um so mehr verkürzt wird, je eher die Last nach dem Anfahrwunschsignal erhöht wird. Mit Verkürzung der errechneten Reaktionszeit Δt wird der Rampendruck der zuschaltenden Kupplung und deren Momentübernahme erhöht.

Die in der Fig. 4 dargestellte Kennlinie n_VHL stellt dabei einen Fahrzustand "Vorwärts bergauf mit Last" und die Kennlinie n_RHL einen Fahrzustand "Vorwärtsfahrt bergauf mit Rückrollen und mit Last" dar, wobei die Kennlinien jeweils einem bestimmten Drosselklappenwinkel DKI zugeordnet sind. Bei stärkeren Lastanforderungen würden die entsprechenden Kennlinien bei einer geringeren Reaktionszeit beginnen, während die Kennlinien für dieselben Fahrzustände ohne Lastanforderung bei einem späteren Zeitpunkt starten, wie die Kennlinie n_VE für den Fahrzustand "Vorwärtsfahrt in der Ebene ohne Last" in der Fig. 4 zeigt.

Durch die Verschiebung der Kennlinien in Richtung geringerer Reaktionszeiten läßt sich die Erkennung der Drehrichtung der Abtriebswelle früher durchführen, wobei eine dem tatsächlichen Fahrzustand angepaßte Synchronpunktberechnung und eine entsprechend verbesserte Druckansteuerung der zuschaltenden Kupplung mit einem komfortableren Schaltablauf möglich ist.

### Bezugszeichen

- 1: Drehzahlsensor
- 2: Geberrad

- DKI: Drosselklappenwinkel
- F1: Funktion, Unterscheidungsfunktion
- F2: Funktion, Verarbeitungsfunktion
- F3: Funktion, Unterscheidungsfunktion
- F4: Funktion, Unterscheidungsfunktion
- F5: Funktion, Verarbeitungsfunktion
- F6: Funktion, Unterscheidungsfunktion
- F7: Funktion, Verarbeitungsfunktion
- F8: Funktion, Unterscheidungsfunktion
- F9: Funktion, Verarbeitungsfunktion
- F10: Funktion, Verarbeitungsfunktion
- F11: Funktion, Verarbeitungsfunktion
- n_AB: Abtriebsdrehzahl
- n_GW: Drehzahlgrenzwert
- n_VE: Abtriebsdrehzahl-Kennlinie für Fahrzustand "Vorwärtsfahrt in Ebene ohne Last"
- n_VH: Abtriebsdrehzahl-Kennlinie für Fahrzustand "Vorwärtsfahrt am Hang bergab ohne Last"
- n_VHL: Abtriebsdrehzahl-Kennlinie für Fahrzustand "Vorwärtsfahrt am Hang bergab mit Last"
- n_RH: Abtriebsdrehzahl-Kennlinie für Fahrzustand "Vorwärtsfahrt am Hang bergauf mit Rückrollen ohne Last"
- n_RHL: Abtriebsdrehzahl-Kennlinie für Fahrzustand "Vorwärtsfahrt am Hang bergauf mit Rückrollen und mit Last"
- p_b: Bremsdruck
- t: Zeit
- Δt: Reaktionszeit
- Δt_1: Reaktionszeit bis Anrollen in der Ebene ohne Last
- Δt_2: Reaktionszeit bis Anrollen am Hang ohne Last
- Δt_3: Zeitspanne zwischen Anfahrwunsch und Lastanforderung

## Patentansprüche

1. Verfahren zur Erkennung eines Fahrzustands bei einem Anrollen eines Kraftfahrzeuges mit einer Standabkopplung (SBC) eines Antriebsstranges über ein kraftschlußführendes Schaltelement, wobei eine Drehrichtung einer Abtriebswelle eines automatisierten Getriebes bei dem Anrollen des Kraftfahrzeuges erkannt wird und wobei ein Drehzahlsensor vorgesehen ist, welcher ein von einem Geberrad bei Rotation der Abtriebswelle erzeugtes Signal an eine elektronische Getriebesteuerung ausgibt, wobei ein zeitabhängiges Verhalten einer ermittelten Getriebeabtriebsdrehzahl (n_AB) oder einer hierzu äquivalenten Größe mit zugehörigen, für den Fahrzustand beim Anrollen des Kraftfahrzeuges in Vorwärtsfahrt (D) oder Rückwärtsfahrt (R) charakteristischen Kenngrößen (n_VE, n_VH, n_VHL, n_RH, n_RHL) zur Erkennung des tatsächlichen Fahrzustandes verglichen wird, wobei jeweils Kenngrößen (n_VE, n_VH, n_VHL, n_RH, n_RHL) für die Fahrzustände
"Vorwärtsfahrt in der Ebene" und/oder
"Vorwärtsfahrt bergab" und/oder
"Vorwärtsfahrt bergauf" und/oder
"Vorwärtsfahrt bergauf mit Rückrollen" und/oder
"Rückwärtsfahrt in der Ebene" und/oder
"Rückwärtsfahrt bergab" und/oder
"Rückwärtsfahrt bergauf" und/oder
"Rückwärtsfahrt bergauf mit Rückrollen"
jeweils ohne Last und/oder mit Last abgelegt sind, und wobei eine Synchronpunktberechnung beim Schließen des kraft-schlußführenden Schaltelementes in Abhängigkeit des erkannten Fahrzustandes durchgeführt wird.

2. Verfahren nach Anspruch 1, **dadurch gekennzeichnet, dass** als Kriterium zur Unterscheidung zwischen den Fahrzuständen eine Reaktionszeit (Δt) herangezogen wird, welche von einem Anfahnivunschsignal bis zu einem Erkennen einer Abtriebsdrehzahl (n_AB) größer Null verstrichen ist.

3. Verfahren nach Anspruch 2, **dadurch gekennzeichnet, dass** die Reaktionszeit (Δt) in Abhängigkeit motorspezifischer Kennwerte und/oder einer Fahrzeugmasse und/oder einer Achsübersetzung und/oder einem Anfahrelement abgelegt ist.

4. Verfahren nach Anspruch 2 oder 3, **dadurch gekennzeichnet, dass** das Anfahrwunschsignal erkannt wird, wenn ein Bremssignal deaktiviert wird und/oder wenn ein Bremsdruck (p_b) kleiner als ein Grenzwert ist und/oder wenn die Abtriebsdrehzahl (n_AB) größer als ein Grenzwert ist.

5. Verfahren nach einem der Ansprüche 1 bis 4, **dadurch gekennzeichnet, dass** als Kriterium zur Unterscheidung zwischen den Fahrzuständen ein Gradient der Abtriebsdrehzahl (n_AB) herangezogen wird.

6. Verfahren nach Anspruch 5, **dadurch gekennzeichnet, dass** als Fahrzustand ein Anrollen in Vorwärtsfahrt in der Ebene erkannt wird, wenn die Abtriebsdrehzahl (n_AB) kontinuierlich zunimmt.

7. Verfahren nach Anspruch 5, **dadurch gekennzeichnet, dass** als Fahrzustand ein Anfahren in Vorwärtsfahrt bergauf mit Rückwärtsrollen bergab erkannt wird, wenn die Abtriebsdrehzahl (n_AB) für kurze Zeit mit geringem Gradienten ansteigt und anschließend wieder zu Null wird, um nach dem Stillstand wieder zu beschleunigen.

8. Verfahren nach einem der Ansprüche 3 bis 7, **dadurch gekennzeichnet, dass** eine Druckansteuerung einer beim Anrollen des Fahrzeugs zuschaltenden Kupplung und/oder einer Vorgabe eines beim Anrollen des Fahrzeugs maximal zulässigen Motormomentes in Abhängigkeit von angewählter Fahrrichtung und erkannter tatsächlicher Anrollrichtung erfolgt.

9. Verfahren nach einem der Ansprüche 3 bis 8, **dadurch gekennzeichnet, dass** die Synchronpunktberechnung bei Erkennen eines Anrollens an einem Hang erst gestartet wird, wenn eine Unterscheidung auf Anrollen in Vorwärtsfahrtrichtung oder Rückwärtsfahrtrichtung getroffen ist.

10. Verfahren nach einem der Ansprüche 1 bis 9, **dadurch gekennzeichnet, dass** mittels der in Kennlinien abgelegten Kenngrößen für Fahrzustände mit einem Anrollen am Hang eine Hangneigung ermittelt wird.

11. Verfahren nach einem der Ansprüche 2 bis 10, **dadurch gekennzeichnet, dass** die errechnete Reaktionszeit (Δt) bis zum Erkennen einer Abtriebsdrehzahl (n_AB) verkürzt wird, wenn eine Lastanforderung nach einem Anfahrwunsch und vor einem Erkennen einer Abtriebsdrehzahl vorliegt.

12. Verfahren nach Anspruch 11, **dadurch gekennzeichnet, dass** die errechnete Reaktionszeit (Δt) in Abhängigkeit einer zwischen dem Anfahrwunschsignal und der Lastanforderung verstrichenen Zeit (Δt_3) und einer Fahrpedalstellung (DKI) verkürzt wird.

13. Verfahren nach einem der Ansprüche 1 bis 12, **dadurch gekennzeichnet, dass** ein Geberrad mit symmetrisch ausgebildeten Zahnflanken verwendet wird.

14. Vorrichtung zur Durchführung des Verfahrens nach einem der Ansprüche 1 bis 13, **dadurch gekennzeichnet, dass** zur Erkennung der Drehrichtung einer Abtriebswelle eines automatisierten Getriebes bei einem Anrollen eines Kraftfahrzeuges mit einer Standabkoppelung (SBC) eines Antriebsstranges über ein kraftschlußführendes Schaltelement ein Drehzahlsensor vorgesehen ist, welcher ein von einem Geberrad bei Rotation der Abtriebswelle erzeugtes Signal an eine elektronische Getriebesteuerung ausgibt, wobei die elektronische Getriebesteuerung Mittel zur Speicherung von für einen Fahrzustand in Vorwärtsfahrt (D) oder Rückwärtsfahrt (R) charakteristischen Kenngrößen (n_VE, n_VH, n_VHL, n_RH, n_RHL), Mittel zum Vergleich eines zeitabhängigen Verhaltens einer ermittelten Getriebeabtriebsdrehzahl (n_AB) mit zugehörigen, für den Fahrzustand in Vorwärtsfahrt (D) oder Rückwärtsfahrt (R) charakteristischen Kenngrößen (n_VE, n_VH, n_VHL, n_RH, n_RHL) und Mittel für eine Synchronpunktberechnung beim Schließen des kraftschlußführenden Schalt-elementes in Abhängigkeit des erkannten Fahrzustandes aufweist.

## Claims

1. Procedure for the detection of a vehicle status when a vehicle starts rolling with Stand-by-Control (SBC) engaged for the driveline via a force-locking shift element while the direction of rotation of the output shaft of the automated transmission is detected when the vehicle starts rolling and where a speed sensor has been planned which outputs a signal generated by the pulse-generator wheel in the case of output shaft rotation for the electronic transmission control unit whereas a time-dependent behavior of the determined transmission output speed (n_AB) or a corresponding equivalent parameter with the respective characteristic key indicators (n_VE, n_VH, n_VHL, n_RH, n_RHL) for the vehicle status when the vehicle starts rolling forward (D) or backwards (R) is used for comparison purposes in order to detect the actual vehicle status, while the respective key indicators (n_VE, n_VH, n_VHL, n_RH, n_RHL) for the vehicle statuses
"Forwards on level ground" and/or
"Forwards downhill" and/or
"Forwards uphill" and/or
"Forwards uphill with backwards rolling motion" and/or
"Reversing on level ground" and/or
"Reversing downhill" and/or
"Reversing uphill" and/or
"Reversing uphill with backwards rolling motion"
have respectively been designed without load and/or with load, and where the calculation of the point of synchronization while closing the force-locking shift element is performed in relation with the vehicle status detected.

2. A method according to claim 1, **characterized in that** the criterion for differentiation between the driving statuses uses a response time (Δt) which has elapsed as of the starting request signal issued until the detection of the output speed (n_AB) larger than zero.

3. A method according to claim 2, **characterized in that** a response time (Δt) is filed in relation to engine-specific characteristics and/or a vehicle mass and/or an axle ration and/or a starting element.

4. A method according to claim 2 or 3, **characterized in that** the starting request signal is recognized if a brake signal is being deactivated and/or if the brake pressure (p_b) is smaller than the limit value and/or if the output speed (n_AB) is larger than a given limit value.

5. A method according to one of the claims 1 up to 4, **characterized in that** the criterion used for differentiation between the vehicle statuses is a gradient of the output speed (n_AB).

6. A method according to claim 5, **characterized in that** a driving status is recognized as rolling off motion forwards on ground level if the output speed (n_AB) is continuously increasing.

7. A method according to claim 5, **characterized in that** a driving status is recognized as starting forwards uphill with backwards rolling motion if the output speed (n_AB) is briefly rising with a low gradient and subsequently returns to zero in order to accelerate again once standstill has been reached.

8. A method according to one of the claims 3 up to 7, **characterized in that** pressure control is effected in relation to a preselected driving direction and recognized actual rolling off direction upon rolling off motion of the vehicle with an engaging clutch and/or a predetermined maximum permissible engine torque for the rolling off motion of the vehicle.

9. A method according to one of the claims 3 up to 8, **characterized in that** the calculation of the point of synchronization will be started upon recognition of rolling off motion on a gradient once a difference can be established for rolling off in forward or backward direction.

10. A method according to one of the claims 1 up to 9, **characterized in that** a gradient's inclination is determined by means of the key parameters saved to the characteristics curves for vehicle statuses with rolling off motion at a gradient.

11. A method according to one of the claims 2 up to 10, **characterized in that** the calculated response time (Δt) is reduced until the output speed (n_AB) is recognized once a load request in accordance with the starting request is present and prior to the detection of an output speed.

12. A method according to claim 11, **characterized in that** the calculated response time (Δt) is reduced in relation to a time period (Δt_3) elapsed between the starting request signal as well as the load requirement and the accelerator pedal position (DKI).

13. A method according to one of the claims 1 up to 12, **characterized in that** a pulse-generator wheel with symmetrically designed tooth flanks is being used.

14. A system for the implementation of the method according to one of the claims 1 up to 13, **characterized in that** for the detection of a vehicle status when a vehicle starts rolling with Stand-by-Control (SBC) engaged for the driveline via a force-locking shift element while the direction of rotation of the output shaft of the automated transmission is detected when the vehicle starts rolling, a speed sensor has been planned which outputs a signal generated by the pulse-generator wheel in the case of output shaft rotation for the electronic transmission control unit, whereas the electronic transmission control unit disposes over means for saving the key parameters (n VE, n VH, n_VHL, n_RH, n_RHL) for the vehicle status identified as forward motion (D) or reversing (R), furthermore it contains means of comparison for the time-dependent behavior of the determined transmission output speed (n_AB) with the corresponding vehicle status is used with the respective key indicators (n_VE, n_VH, n_VHL, n_RH, n_RHL) when the vehicle starts rolling forwards (D) or backwards (R), and it holds means of calculating the point of synchronization when closing the force-locking shift element in relation to the detected vehicle status.

## Revendications

1. Méthode de réconnaissance d'un état de conduite dans la phase de démarrage d'un véhicule automobile doté d'un équipement stand-by-control (SBC) pour le désaccouplement d'une chaîne cinématique par l'intermédiaire d'un élément d'accouplement par friction, sachant que lors du démarrage du véhicule automobile est reconnu un sens de rotation de l'arbre de sortie d'une transmission automatisée et sachant qu'est prévu un capteur de régime, celui-ci émettant un signal généré par une roue de capteur lors de la rotation de l'arbre de sortie qui est transmis à un boîtier de commande électronique de la transmission, sachant qu'un comportement temporisé d'un régime de sortie de la transmission déterminé (n_AB) ou d'une grandeur équivalente à ce régime est comparé avec des valeurs caractéristiques (n_VE, n_VH, n_VHL, n_RH, n_RHL) de l'état de conduite lors de la phase de démarrage d'un véhicule automobile en marche avant (D) ou en marche arrière (R) pour la reconnaissance de l'état de conduite réel, sachant que les valeurs caractéristiques (n_VE, n_VH, n_VHL, n_RH, n_RHL) pour les états de conduite suivants :
"Marche avant sur le plat" et/ou
"Marche avant en descente" et/ou
"Marche avant en montée" et/ou
"Marche avant en montée avec recul" et/ou
"Marche arrière sur le plat" et/ou
"Marche arrière en descente" et/ou
"Marche arrière en montée" et/ou
"Marche arrière en montée avec recul"
sont enregistrés à chaque fois sans et/ou avec charge, et sachant que lors de la fermeture de l'élément d'accouplement par friction est effectué un calcul du point de synchronisation en fonction de l'état de conduite reconnu.

2. Méthode selon la revendication 1, **caractérisée en ce que** en tant que critère de différenciation entre les états de conduite est utilisé un temps de réaction (Δt), celui-ci s'étant écoulé à partir de l'émission d'un signal souhaité de démarrage et jusqu'à la reconnaissance d'un régime de sortie (n_AB) supérieur à 0.

3. Méthode selon la revendication 2, **caractérisée en ce que** le temps de réaction (Δt) est enregistré en fonction de paramètres spécifiques au moteur et/ou une masse de véhicule et/ou un rapport au pont et/ou un élément de démarrage.

4. Méthode selon les revendications 2 ou 3, **caractérisée en ce que** le signal souhaité de démarrage est reconnu dès qu'un signal de freinage est désactivé et/ou une pression de freinage (p_b) est inférieure à un seuil et/ou le régime de sortie (n_AB) est supérieur à un seuil.

5. Méthode selon une des revendications 1 à 4, **caractérisée en ce que** en tant que critère de différenciation entre les états de conduite est utilisé un gradient du régime de sortie (n_AB).

6. Méthode selon la revendication 5, **caractérisée en ce que** en tant que état de conduite est reconnu le roulage en marche avant sur le plat, lorsque le régime de sortie (n_AB) augmente progressivement.

7. Méthode selon la revendication 5, **caractérisée en ce que** en tant qu'état de conduite est reconnu un démarrage en marche avant en montée avec recul en descente, lorsque le régime de sortie (n_AB) augmente avec un petit gradient pour une courte durée et tombe ensuite jusqu'à 0, pour permettre, après l'arrêt, l'accélération.

8. Méthode selon une des revendications 3 à 7, **caractérisée en ce que** un pilotage de la pression d'un embrayage, actionné lors de la phase de démarrage du véhicule et/ou en cas d'une consigne d'un couple moteur maximum admissible lors du démarrage du véhicule, s'effectue en fonction du sens de marche sélectionné et du sens de démarrage réel reconnu.

9. Méthode selon une des revendications 3 à 8, **caractérisée en ce que** le calcul du point de synchronisation lors de la reconnaissance d'un démarrage en pente n'est lancé qu'au moment où le système a discerné les situations de démarrage en sens de marche avant ou en sens de marche arrière.

10. Méthode selon une des revendications 1 à 9, **caractérisée en ce que** une tendance de pente est déterminée à l'aide des paramètres pour les états de marche prévoyant un démarrage en pente et enregistrés dans les lois caractéristiques.

11. Méthode selon une des revendications 2 à 10, **caractérisée en ce que** le temps de réaction calculée (Δt) s'écoulant jusqu'à la reconnaissance d'un régime de sortie (n_AB) est réduit lorsqu'il y a une demande de charge du conducteur après une demande de démarrage et avant une reconnaissance d'un régime de sortie.

12. Méthode selon la revendication 11, **caractérisée en ce que** le temps de réaction calculé (Δt) est réduit en fonction d'un temps (Δt_3) écoulé entre l'émission du signal de demande de démarrage et la demande de charge du conducteur et une position du pédale d'accélérateur (DKI).

13. Méthode selon une des revendications 1 à 12, **caractérisée en ce que** est utilisée une roue de capteur dotée de flancs de dents symétriques.

14. Dispositif de réalisation de la méthode selon une des revendications 1 à 13, **caractérisé en ce que** pour la reconnaissance du sens de rotation d'un arbre de sortie d'une transmission automatisée lors de la phase de démarrage d'un véhicule automobile doté d'un équipement stand-by-control (SBC) pour le désaccouplement d'une chaîne cinématique par l'intermédiaire d'un élément d'accouplement par friction est prévu un capteur de régime, celui-ci émettant un signal qui est transmis par une roue de capteur, lorsque l'arbre de sortie tourne, à un boîtier de commande électronique de boîte de vitesses, sachant que le boîtier de commande électronique de la boîte de vitesses comporte des éléments de stockage de valeurs caractéristiques (n VE, n VH, n_VHL, n_RH, n_RHL) pour un état de conduite en marche avant (D) ou en marche arrière (R), des éléments de comparaison d'un comportement déterminé d'un régime de sortie de la boîte de vitesses en fonction du temps (n_AB) avec des valeurs caractéristiques (n VE, n VH, n_VHL, n_RH, n_RHL) associées pour les états de conduite en marche avant (D) ou en marche arrière (R) et des éléments pour un calcul du point de synchronisation lors de la fermeture de l'élément d'accouplement par friction en fonction de l'état de conduite reconnu.
